# EUROPÄISCHE PATENTSCHRIFT

(11) **EP 2 643 566 B1**
(45) Veröffentlichungstag und Bekanntmachung des Hinweises auf die Patenterteilung: **31.12.2014**
(21) Anmeldenummer: 11782639.6
(22) Anmeldetag: 17.11.2011
(51) Int. Cl.: B01D 53/94, F01N 3/20, F01N 3/28

(54) **VERBINDUNG ZWEIER ABGASBEHANDLUNGSVORRICHTUNGEN ZUEINANDER**
CONNECTION BETWEEN TWO EXHAUST GAS TREATING DEVICES
CONNECTION ENTRE DEUX DISPOSITIFS DE TRAITEMENT DE GAZ D'ÉCHAPPEMENT

(30) Priorität: 26.11.2010 DE 102010052650
(43) Veröffentlichungstag der Anmeldung: 02.10.2013
(73) Patentinhaber: Emitec Gesellschaft für Emissionstechnologie mbH, 53797 Lohmar (DE)
(72) Erfinder: BRÜCK, Rolf, 51429 Bergisch Gladbach (DE); ALTHÖFER, Kait, 51674 Wiehl (DE)
(74) Vertreter: Rössler, Matthias
(86) Internationale Anmeldenummer: PCT/EP2011/070358
(87) Internationale Veröffentlichungsnummer: WO 2012/069355

(56) Entgegenhaltungen:
- WO-A1-92/13636
- DE-A1-102008 025 593
- DE-A1-102008 035 561

## Beschreibung

Die vorliegende Erfindung betrifft eine Anordnung von zwei hintereinander angeordneten Abgasbehandlungsvorrichtungen in einer Abgasleitung, insbesondere in einer Abgasleitung einer Verbrennungskraftmaschine, wobei die eine Abgasbehandlungsvorrichtung sich an der anderen Abgasbehandlungsvorrichtung über zumindest einen Stützkörper abstützt.

Aus der WO-A1-2008/145556 ist eine Wabenkörperanordnung bekannt, bei der ein elektrisch beheizbarer Wabenkörper über Stützstifte an einem nachgelagerten Stützkatalysator abgestützt ist. Dort wird unter anderem vorgeschlagen, eine möglichst geringe Anzahl von Stützstiften vorzusehen. Weiterhin wird dort auf ein besonderes Montageverfahren der Anordnung Bezug genommen.

Elektrisch beheizbare Katalysatoren kommen in modernen Abgassystemen immer häufiger zum Einsatz, weil strenge Abgasvorschriften in den Ländern dazu führen, dass gerade auch das Kaltstartverhalten von Abgassystemen bei Kraftfahrzeugen immer mehr Beachtung erlangt. Ein elektrischer Heizkatalysator verkürzt, durch Aufheizung des Abgasstroms und/oder der katalytisch aktiven Fläche, die Zeit, die die in der Abgasleitung vorgesehene Abgasbehandlungseinheiten benötigen, um eine für die Umsetzung von Schadstoffen erforderliche Mindesttemperatur zu erreichen. Dadurch können Schadstoffe bereits während der Kaltstartphase einer Verbrennungskraftmaschine sicher und nahezu vollständig aus dem Abgas entfernt werden bzw. umgesetzt werden.

Die Heizkatalysatoren sind vielfach nach Art einer (kurzen) Scheibe aufgebaut und können in einer Anordnung mit einem weiteren sogenannten Stützkatalysator eingesetzt werden, wobei die Wabenstrukturen dieser beiden Katalysatoren über Stützkörper miteinander verbunden sind. Die Positionierung der Stützkörper kann auch dazu verwendet werden, dass in den Wabenstrukturen (elektrisch isolierende) Luftspalte ausgebildet sind, die einen vorgegebenen Strompfad durch den elektrischen Heizer verwirklichen.

Durch den vermehrten Einsatz dieser Heizer und/oder Heizkatalysatoren steigen gleichermaßen die Anforderungen an derartige Komponenten. So werden Wabenstrukturen mit möglichst dünnen Wanddicken und/oder hoher Kanaldichte eingesetzt, die eine schnelle Reaktionszeit und hohe Effektivität in der Umsetzung von Schadstoffen erreichen. Die so gestalteten Abgasbehandlungsvorrichtungen sind jedoch auch anfällig für Beschädigungen, die gerade bei der Verwendung eines Wabenkörpers als Stützkatalysator für einen elektrisch beheizbaren Katalysator dadurch auftreten, dass der Stützkatalysator Stützkörper aufnehmen muss, damit der elektrisch beheizbare Katalysator elektrisch isoliert gegenüber der Abgasleitung und mechanisch fixiert angeordnet werden kann.

Aufgabe der Erfindung ist es daher, die mit Bezug auf den Stand der Technik geschilderten Probleme zumindest teilweise zu lösen und insbesondere eine Anordnung zweier hintereinander angeordneter Abgasbehandlungsvorrichtungen anzugeben, die den erhöhten mechanischen Anforderungen im Betrieb dauerhaft widerstehen kann.

Diese Aufgaben werden gelöst mit einer Anordnung gemäß den Merkmalen des Patentanspruchs 1. Vorteilhafte Ausgestaltungen der Erfindung sind in den abhängig formulierten Patentansprüchen angegeben. Es ist darauf hinzuweisen, dass die in den Patentansprüchen einzeln aufgeführten Merkmale in beliebiger, technologisch sinnvoller, Weise miteinander kombiniert werden können und weitere Ausgestaltungen der Erfindung aufzeigen. Die Beschreibung, insbesondere im Zusammenhang mit den Figuren, erläutert die Erfindung weiter und führt ergänzende Ausführungsbeispiele der Erfindung an.

Die erfindungsgemäße Anordnung umfasst zwei hintereinander angeordnete Abgasbehandlungsvorrichtungen in einer Abgasleitung, insbesondere einer Abgasleitung einer Verbrennungskraftmaschine eines Kraftfahrzeugs. Dabei ist eine erste Abgasbehandlungsvorrichtung mit einem ersten Teilbereich über mindestens einen Stützkörper mit einem zweiten Teilbereich einer zweiten Abgasbehandlungsvorrichtung verbunden. Der Stützkörper weist gegenüberliegende Enden auf und ist an den Enden über Anbindungspunkte mit jeweils einem Teilbereich verbunden. Zumindest der zweite Teilbereich ist durch metallische Komponenten gebildet. Diese metallischen Komponenten formen durch gegenseitige Kontaktierung Kontaktflächen, wobei höchstens 20 % der Fläche der Kontaktflächen zumindest Lötverbindungen oder Diffusionsverbindungen aufweist.

Insbesondere wird hier auf die bereits zitierte WO-A1-2008/145556 verwiesen, die hiermit vollumfänglich zur Beschreibung des Aufbaus der Anordnung und/oder der Gestalt der Stützkörper in Bezug genommen wird, wobei die hier angeführten Stützkörper den dort beschriebenen Stützstiften entsprechen können. Insbesondere handelt es sich bei der vorliegenden Anordnung um einen Apparat, umfassend einen elektrisch beheizbaren Wabenkörper (erste Abgasbehandlungsvorrichtung) und einen stromabwärts von diesem angeordneten sogenannten Stützkatalysator (katalytisch beschichtete zweite Abgasbehandlungsvorrichtung), wobei diese bevorzugt über separate Gehäuseteile verfügen. Die zweite Abgasbehandlungsvorrichtung übernimmt die Funktion, die erste Abgasbehandlungsvorrichtung mechanisch zu stützen. Dazu hält die zweite Abgasbehandlungsvorrichtung die erste Abgasbehandlungsvorrichtung in axialer Richtung, das heißt in Durchströmungsrichtung des Abgases, und insbesondere auch in radialer Richtung und in Umfangsrichtung in einer vorgegebenen Relativlage. Der elektrisch beheizbare Wabenkörper (erste Abgasbehandlungsvorrichtung) weist insbesondere voneinander elektrisch isolierte Zonen auf, die anfälliger für eine Verschiebung sowohl in axialer Richtung als auch in radialer Richtung oder in Umfangsrichtung des Wabenkörpers sind. Die Fixierung der Wabenstruktur des elektrisch beheizbaren Wabenkörpers wird über die hier angeführten Stützkörper erreicht, die einerseits in der ersten Abgasbehandlungsvorrichtung als auch in der stromabwärts angeordneten zweite Abgasbehandlungsvorrichtung jeweils stoffschlüssig ("Stoffschlüssige Verbindungen" werden alle Verbindungen genannt, bei denen die Verbindungspartner durch atomare oder molekulare Kräfte zusammengehalten werden.) über einzelne oder mehrere Anbindungspunkte an metallischen Komponenten angebunden sind.

Die hier genannte erste Abgasbehandlungsvorrichtung ist demnach insbesondere ein elektrisch beheizbarer Wabenkörper, wobei zudem die hier angeführte zweite Abgasbehandlungsvorrichtung ein so genannter Stützkatalysator ist.

Der Stützkörper ist insbesondere ein metallischer Stift, dessen zumindest eine Ende eine elektrische Isolierung aufweist. Grundsätzlich ist auch möglich, dass mehrere Stifte, die ggf. an einer gemeinsamen Stifthalterung angeordnet sind, einen Stützkörper bilden. Zudem können verschiedene Arten von Stiften, Stifthalterungen, etc. miteinander kombiniert werden. Der Stützkörper ist bevorzugt mit der Wabenstruktur der ersten Abgasbehandlungsvorrichtung und der zweiten Abgasbehandlungsvorrichtung mechanisch fest verbunden, so dass eine Abstützung (der Wabenstruktur) der ersten Abgasbehandlungsvorrichtung durch (die Wabenstruktur) der zweiten Abgasbehandlungsvorrichtung erreicht wird. Insbesondere weist der Stützkörper zumindest teilweise eine elektrische Isolierung auf für den Fall, dass die erste Abgasbehandlungsvorrichtung einen elektrisch beheizbaren Wabenkörper umfasst, der gegenüber der zweiten Abgasbehandlungsvorrichtung und insbesondere auch gegenüber der Abgasleitung bzw. dem Gehäuse elektrisch isoliert angeordnet wird. Insbesondere ist der Stützkörper kraftschlüssig ("Kraftschlüssige Verbindungen" entstehen durch die Übertragung von Kräften wie z. B. Druckkräfte oder Reibungskräfte, wobei der Zusammenhalt der kraftschlüssigen Verbindung rein durch die wirkende Kraft gewährleistet wird.) mit metallischen Komponenten der Abgasbehandlungsvorrichtungen verbunden, also z. B. geklemmt, oder aber stoffschlüssig, z. B. über eine Lötverbindung, Schweißverbindung und/oder Diffusionsanbindung.

Der hier angeführte erste Teilbereich ist in der ersten Abgasbehandlungsvorrichtung angeordnet und umfasst insbesondere einen in alle Richtungen (radiale Richtung, axiale Richtung, Umfangsrichtung) begrenzten Teilbereich, um den in diesem ersten Teilbereich angeordneten Stützkörper bzw. dessen Anbindungspunkt herum. Insbesondere ist auch der zweite Teilbereich in allen Richtungen (radiale Richtung, axiale Richtung, Umfangsrichtung) begrenzt ausgeführt. Insbesondere weist die zweite Abgasbehandlungsvorrichtung zumindest im Bereich des zweiten Teilbereichs metallische Komponenten auf, durch die eine für das Abgas durchströmbare Wabenstruktur gebildet wird.

Diese metallischen Komponenten (insbesondere Blechfolien, Vliese, Siebe, etc.) formen durch gegenseitige Kontaktierung Kontaktflächen. Dazu weist regelmäßig zumindest eine Komponente eine Struktur auf, z. B. nach Art einer Wellung. Durch das Stapeln bzw. benachbarte Anordnen dieser Komponenten berühren sich diese Komponenten, z. B. nach Art von Streifen entlang der Wellenberge und/oder Wellentäler. Diese werden Kontaktflächen genannt, wobei damit der maximal möglich Anbindungsbereich der Komponenten zueinander beschrieben ist. Diese Kontaktflächen werden jedoch tatsächlich nicht vollständig zur Fixierung der Komponenten zueinander eingesetzt, sondern nur höchstens 20 %, bevorzugt höchstens 10 % und besonders bevorzugt höchstens 5 %. Folglich ist vorgesehen, dass ein signifikanter, überwiegender Anteil der Fläche der Kontaktflächen tatsächlich nur Berührflächen sind, wobei die Berührung im Einsatz wieder gelöst werden kann. Nur in dem vorstehend angegebenen kleinen Anteil sind Verbindungsbereiche mittels Hartlöten und/oder Diffusion erzeugt worden. Insbesondere bilden diese Lötverbindungen und/oder Diffusionsverbindungen eine Art (flexibles) Skelett (zumindest an der zweiten Stirnseite der zweiten Abgasbehandlungsvorrichtung) aus. Gegebenenfalls sind im zweiten Teilbereich überhaupt keine Lötverbindungen und/oder Diffusionsverbindungen an den Kontaktflächen vorgesehen.

Entgegen der bisherigen Annahme, dass der insbesondere zur Abstützung verwendete zweite Teilbereich der zweiten Abgasbehandlungsvorrichtung eine möglichst feste Struktur aufweisen sollte, wird hier nun vorgeschlagen, dass nur geringe Anteile der durch gegenseitige Kontaktierung gebildeten Kontaktflächen eine stoffschlüssige Anbindung (Lötverbindung und/oder Diffusionsverbindung) aufweisen. Durch diesen geringen Anteil an stoffschlüssiger Anbindung der Kontaktflächen wird eine Flexibilität zumindest im Bereich des zweiten Teilbereichs erreicht, so dass im Betrieb auftretende unterschiedliche Verformungen der ersten Abgasbehandlungsvorrichtung gegenüber der zweiten Abgasbehandlungsvorrichtung, insbesondere durch eine unterschiedliche Verformung der jeweiligen Wabenstrukturen, ausgeglichen bzw. kompensiert werden können, so dass eine Schädigung der Wabenstruktur der ersten Abgasbehandlungsvorrichtung und/oder auch der zweiten Abgasbehandlungsvorrichtung vermieden wird und weiterhin auch der mindestens eine Stützkörper (insbesondere aufgrund der signifikant reduzierten Scherbeanspruchung) keinen Schaden nimmt. Dabei ist der zweite Teilbereich insbesondere an einer der ersten Abgasbehandlungsvorrichtung zugewandten zweiten Stirnseite der zweiten Abgasbehandlungsvorrichtung angeordnet und erstreckt sich von dort ausgehend in eine Wabenstruktur der zweiten Abgasbehandlungsvorrichtung hinein.

Bislang wurde es als wichtig angesehen, dass metallische Wabenkörper gerade im Abgaseintrittsbereich möglichst vollständig und großflächig verlötet sind, so dass eine Schädigung der Wabenstruktur durch die Abgaspulsationen möglichst nicht auftritt. Hiervon wird nun abgerückt, weil insbesondere im Abgaseintrittsbereich ein zweiter Teilbereich mit einem geringen Anteil an Lötverbindungen vorgesehen ist, so dass sich insbesondere die Stützkörper innerhalb der zweiten Abgasbehandlungsvorrichtung gegenüber dem Gehäuse verschieben können. Durch die Anordnung der ersten Abgasbehandlungsvorrichtung stromaufwärts der zweiten Abgasbehandlungsvorrichtung kann aber eine Laminarisierung des Abgasstroms erfolgen, so dass die Belastungen der Abgaseintrittsseite der zweiten Abgasbehandlungsvorrichtung verringert werden.

Gemäß einer vorteilhaften Weiterbildung der Anordnung ist zumindest die zweite Abgasbehandlungsvorrichtung ein Wabenkörper, der zumindest eine Wabenstruktur und ein die Wabenstruktur umschließendes Gehäuse umfasst. Dabei ist die Wabenstruktur zumindest teilweise durch glatte und strukturierte metallische Lagen gebildet. Insbesondere werden so (im Wesentlichen axial verlaufende) Strömungskanäle für das Abgas gebildet, durch die das Abgas bei der Durchströmung der Abgasbehandlungsvorrichtung geführt wird. Insbesondere weisen diese eine Dichte von zumindest 50 Kanälen pro Quadratzentimeter auf, insbesondere von mehr als 200 Kanälen pro cm² bzw. mehr als 600 Kanälen pro cm². Diese Dichte bezieht sich auf die jeweiligen Stirnseiten der Abgasbehandlungsvorrichtung, in die das Abgas in die Abgasbehandlungsvorrichtung eintritt bzw. aus ihr wieder heraustritt. Dabei kann der zweite Teilbereich eine andere Dichte aufweisen als andere Bereiche der Wabenstruktur. Die metallisch glatten und strukturierten Lagen sind insbesondere aufeinander gestapelt und/oder miteinander verwunden und/oder gewickelt.

Insbesondere umfasst der zweite Teilbereich der zweiten Abgasbehandlungsvorrichtung, in dem der mindestens eine Stützkörper mit einem Ende angeordnet ist, mindestens 10, bevorzugt mindestens 50 und besonders bevorzugt mindestens 500 Kanäle, und erstreckt sich insbesondere von der der ersten Abgasbehandlungsvorrichtung zugewandten Stirnseite der zweiten Abgasbehandlungsvorrichtung bis zum Anbindungspunkt des Endes des Stützkörpers. Insbesondere sind diese Kanäle innerhalb eines Radius um den Stützkörper herum angeordnet, wobei der Radius mit der steigenden Anzahl der Kanäle sich gleichmäßig in alle (radialen) Richtungen erweitert. Insbesondere erstreckt sich der zweite Teilbereich tiefer in axialer Richtung in die Wabenstruktur der zweiten Abgasbehandlungsvorrichtung hinein, insbesondere um mindestens 20 % und bevorzugt um mindestens 50 % tiefer als die Tiefe des Anbindungspunktes, gemessen von der der ersten Abgasbehandlungseinheit zugewandten Stirnseite.

Insbesondere umfasst der zweite Teilbereich eine Ausdehnung mit einem Radius von mindestens 2 mm, bevorzugt mindestens 5 mm und ganz besonders bevorzugt mindestens 8 mm um den Anbindungspunkt herum zumindest in radialer Richtung der Abgasbehandlungsvorrichtung und insbesondere kugelförmig um den Anbindungspunkt. Ganz besonders bevorzugt erfasst der zweite Teilbereich die gesamte zweite Stirnseite der zweiten Abgasbehandlungsvorrichtung.

Als glatte und/oder strukturierte metallische Lage ist insbesondere eine für Abgasvorrichtungen geeignete Edelstahlfolie vorgesehen, z. B. mit einer Dicke von 30 bis 160 µm [Mikrometer]. Das Gehäuse kann zudem auch ein (elektrisch isoliertes) zweites Gehäuseteil sein, das gegebenenfalls an einem ersten Gehäuseteil der ersten Abgasbehandlungsvorrichtung fixiert ist.

Die Anordnung weist insbesondere mehrere Stützkörper auf, die bedarfsgerecht voneinander beabstandet angeordnet sind. Weiterhin sind insbesondere alle Stützkörper in einem einzigen zweiten Teilbereich angeordnet, wobei aber auch mehrere voneinander beabstandete zweite Teilbereiche vorgesehen sein können, in denen insbesondere jeweils nur ein Stützkörper angeordnet ist.

Gemäß einer weiteren vorteilhaften Ausgestaltung ist die erste Abgasbehandlungsvorrichtung zumindest teilweise durch Stapel aus metallischen Lagen gebildet, wobei die Lagen zumindest im ersten Teilbereich zumindest teilweise durch Luftspalte voneinander beabstandet sind.

Diese Luftspalte dienen insbesondere der elektrischen Isolierung der einzelnen metallischen Lagen gegeneinander, so dass ein elektrisch beheizbarer Wabenkörper erzeugt ist. Infolge dieser isolierenden Luftspalte weist die erste Abgasbehandlungsvorrichtung zumindest in Teilbereichen der Wabenstruktur einen geringeren Verformungswiderstand auf, so dass gerade infolge der thermischen Wechselbeanspruchung der ersten Abgasbehandlungsvorrichtung eine Verformung der Wabenstruktur durch eine Längung der metallischen Lagen erfolgt. Durch diese Verformung der metallischen Lagen wird auch der im ersten Teilbereich angeordnete Stützkörper mitbewegt bzw. durch Biegekräfte und Scherkräfte belastet. Insbesondere um diese Bewegungen zu kompensieren bzw. die Belastungen zu verringern, weist der zweite Teilbereich der zweiten Abgasbehandlungsvorrichtung eine entsprechende Flexibilität auf, so dass auch hier der Stützkörper eine entsprechende Bewegung ausführen kann. Insbesondere erfolgt diese Bewegung so, dass in beiden Teilbereichen eine gleichgerichtete und möglichst betragsgleiche Bewegung erfolgt. Dies würde zu einer Parallelverschiebung des Stützkörpers führen, so dass dieser insbesondere auch keinen vergrößerten Strömungswiderstand gegenüber dem Abgasstrom bildet. Die Flexibilität des zweiten Teilbereichs erlaubt insbesondere (auch) eine Abbeugung des Stützkörpers, so dass die Biegekräfte und Scherkräfte im Bereich der Anbindungspunkte im zweiten Teilbereich verringert werden.

Der erste Teilbereich und der zweite Teilbereich sind insbesondere unabhängig voneinander hinsichtlich ihrer Lage, der Anzahl und der Ausdehnung ausgestaltet. Dabei ist bei der Anordnung zu berücksichtigen, dass die Wabenstrukturen in Bezug auf ihre Stapelung, Wicklung oder Verwindung der einzelnen Komponenten so ausgeführt sind, dass diese bei Erwärmung der Abgasbehandlungsvorrichtungen in ihren Verformungseigenschaften zumindest nicht einander entgegenwirken. Dies kann z. B. dadurch erreicht werden, dass die Lagen beider Abgasbehandlungsvorrichtungen mit einer gleichgerichteten S-Form oder ähnliches gewunden sind. Dementsprechend ist auch die Anordnung der Stützkörper vorzunehmen, so dass es vermieden wird, in Bereichen der Wabenstrukturen mit unterschiedlichen Verformungseigenschaften Stützkörper anzuordnen.

Gemäß einer weiteren vorteilhaften Ausgestaltung ist die erste Abgasbehandlungsvorrichtung ein elektrisch beheizbarer Wabenkörper. Dafür weist die erste Abgasbehandlungsvorrichtung die erforderlichen Elektroden und elektrischen Isolationen auf, die eine Stromversorgung ermöglichen. Hierzu sei insbesondere auch auf die einleitenden Ausführungen zum Stand der Technik verwiesen.

Gemäß einer besonders vorteilhaften Weiterentwicklung weist die zweite Abgasbehandlungsvorrichtung eine der ersten Abgasbehandlungsvorrichtung abgewandte erste Stirnseite sowie eine Längsachse auf. In Richtung der Längsachse zwischen dem zweiten Teilbereich und der ersten Stirnseite weist die zweite Abgasbehandlungsvorrichtung zudem nur in einem axial begrenzten Abschnitt Kontaktflächen von gegenseitig sich kontaktierenden metallischen Komponenten auf, wobei mindestens 80 % der Fläche der Kontaktflächen Lötverbindungen und/oder Diffusionsverbindungen aufweisen. Insbesondere sind in diesem nur axial begrenzten Abschnitt zwischen zweitem Teilbereich und der ersten Stirnseite bevorzugt 100 % der Kontaktflächen durch Lötverbindungen und/oder Diffusionsverbindungen stoffschlüssig miteinander verbunden. Geringe Abweichungen hiervon sind natürlich ebenfalls umfasst. Insbesondere ist die axiale Erstreckung dieses Abschnitts auf eine Länge von höchstens 5 mm, insbesondere höchstens 10 mm, begrenzt.

Durch diese hier vorgesehene großflächige Anbindung der einzelnen metallischen Komponenten miteinander wird eine hohe mechanische Festigkeit der zweiten Abgasbehandlungsvorrichtung erreicht. Insbesondere ist durch eine derartige stoffschlüssige Anbindung das Teleskopieren der metallischen Komponenten, das heißt ein Verschieben in axialer Richtung gegenüber einem Gehäuse der Abgasbehandlungsvorrichtung nur noch sehr begrenzt möglich bzw. komplett verhindert. Insbesondere wird weiterhin eine hohe Verformungsfestigkeit durch diese Art der Anbindung gewährleistet, so dass hierdurch die Stützwirkung gegenüber den Stützkörpern in ausreichendem Maß gewährleistet ist. Insbesondere erstreckt sich dieser nur axial begrenzte Abschnitt der zweiten Abgasbehandlungsvorrichtung ausgehend von der ersten Stirnseite über höchstens ein Drittel der maximalen axialen Länge der Wabenstruktur der zweiten Abgasbehandlungsvorrichtung, insbesondere über höchstens ein Sechstel. Weiterhin ist es vorteilhaft, wenn ausgehend von der ersten Stirnseite ein weiterer Abschnitt mit einer axialen Länge in Richtung der Längsachse von höchstens 1 mm [Millimeter], insbesondere höchsten 3 mm, frei von Lötverbindungen und/oder Diffusionsverbindungen ist (also ohne stoffschlüssige Verbindung) und sich erst dann der genannte Abschnitt mit mindestens 80 % bzw. 100 % der Fläche der Kontaktflächen mit Lötverbindungen und/oder Diffusionsverbindungen anschließt. Insbesondere umfasst dieser axial begrenzte Abschnitt mit miteinander verbundenen Kontaktflächen ausschließlich die Kontaktflächen zwischen den metallischen Komponenten der Wabenstruktur und nicht zwischen den metallischen Komponenten und dem Gehäuse.

In besonders bevorzugter Weise umfasst dieser axial begrenzte Abschnitt jedoch auch die Kontaktflächen der metallischen Komponenten mit dem Gehäuse, wobei gemäß einer besonders vorteilhaften Ausgestaltung das Gehäuse mit der Wabenstruktur durch Lötverbindungen und/oder Diffusionsverbindungen an allen Kontaktflächen zwischen metallischen Komponenten und Gehäuse verbunden ist.

Gemäß einer weiteren vorteilhaften Ausgestaltung der Anordnung weist die zweite Abgasbehandlungsvorrichtung eine der ersten Abgasbehandlungsvorrichtung zugewandte zweite Stirnseite auf sowie eine Längsachse, wobei die zweite Abgasbehandlungsvorrichtung mindestens eine metallische Komponente mit an der zweiten Stirnseite unterschiedlich langen Bereichen in Richtung der Längsachse umfasst. Dabei sind die Anbindungspunkte zumindest teilweise an den längeren Bereichen der mindestens einen Komponente angeordnet, wobei die längeren Bereiche der Komponente an der zweiten Stirnseite zumindest im zweiten Teilbereich in Richtung der Längsachse über die kürzeren Bereiche der Komponente überstehen.

Das bedeutet insbesondere, dass die metallische Komponente an der zweiten Stirnseite zumindest eine Aussparung aufweist, die sich in axialer Richtung und in einer Richtung parallel zur zweiten Stirnseite erstreckt. In axialer Richtung erstreckt sich diese Aussparung über höchstens 5 mm, bevorzugt höchstens 10 mm. Durch eine derartige Ausgestaltung weist die zweite Abgasbehandlungsvorrichtung an der zweiten Stirnseite zumindest im zweiten Teilbereich eine zerklüftete Stirnfläche auf, wobei zumindest ein Teil der Kanalwände der Wabenstruktur von der zweiten Stirnseite aus gesehen zurückgesetzt angeordnet sind. Dabei umfassen die angesprochenen Bereiche der mindestens einen metallischen Komponente insbesondere nur einen geringen Teil der Breite der metallischen Komponente, wobei sich die Breite quer zur Längsachse der Abgasbehandlungsvorrichtung erstreckt. Dieser geringe Teil der Breite umfasst insbesondere höchstens 5 mm, bevorzugt höchstens 10 mm. Insbesondere sind diese kürzeren Bereiche der Komponente so angeordnet, dass an der zweiten Stirnseite in einem zweiten Teilbereich unmittelbar um den Stützkörper herum keine längeren Bereiche der Komponenten angeordnet sind, so dass eine Abbeugung des Stützkörpers möglich ist, ohne dass dieser längere Bereiche der Komponente im Bereich der zweiten Stirnseite infolge der Abbeugung kontaktiert.

Insbesondere ist es so auch möglich, dass der Stützkörper über Anbindungspunkte an in Richtung der Längsachse kürzeren Bereichen der mindestens einen Komponente angeordnet ist, wobei dann einer Abbeugung des Stützkörpers ein noch geringerer Widerstand entgegensetzt wird.

Gemäß einer weiteren besonders bevorzugten Ausgestaltung der Anordnung ist die zweite Abgasbehandlungsvorrichtung zumindest mit metallischen Komponenten mit mindestens einer Aussparung gebildet, wobei die Aussparung zumindest teilweise benachbart zu einem Anbindungspunkt angeordnet ist. Die Aussparung ist dabei zumindest teilweise zwischen einer der ersten Abgasbehandlungsvorrichtung zugewandten zweiten Stirnseite und dem Anbindungspunkt vorgesehen. Weiterhin erstreckt sie sich insbesondere nicht bis zur zweiten Stirnseite sondern ist in der Komponente angeordnet. Diese Anordnung der Aussparung ermöglicht ebenfalls eine Flexibilisierung des Anbindungspunktes innerhalb der zweiten Abgasbehandlungsvorrichtung. Die Aussparung gewährleistet, dass in diesem Bereich benachbart zu dem Anbindungspunkt keine Abstützung bzw. stoffschlüssige Anbindung der Komponente an weitere Komponenten durch gegenseitige Kontaktierung gewährleistet ist. Dadurch kann der Stützkörper im Bereich der Anbindung eine Bewegung ausführen, der ein geringerer Widerstand entgegengesetzt wird. Die Aussparung ist insbesondere nicht mit Öffnungen zwischen einzelnen Kanälen in der Wabenstruktur zu verwechseln, die einen Austausch der Abgasströmungen ermöglichen, sondern ist vergleichsweise größer und umfasst insbesondere einen Bereich, der in radialer Richtung oder Umfangsrichtung mehrere Kontaktflächen zwischen den entsprechenden metallischen Komponenten umfasst. Insbesondere ist die axiale Länge der Aussparung mindestens so groß wie die Ausdehnung des Anbindungspunktes. Es können insbesondere auch mehrere Aussparungen vorgesehen sein, die im Bereich des mindestens einen Anbindungspunktes angeordnet sind, so dass damit die Flexibilität des Anbindungspunktes für den Stützkörper weiter erhöht wird. Die Aussparungen sind insbesondere auch stromabwärts der Anbindungspunkte in Komponenten angeordnet, die über Anbindungspunkte mit dem Stützkörper verbunden sind. Insbesondere sind die Aussparungen stromabwärts und fluchtend in axialer Richtung zu den Anbindungspunkten angeordnet. Die Aussparung innerhalb der metallischen Komponenten weist insbesondere eine Länge in Richtung der Längsachse von höchstens 5 mm, bevorzugt höchstens 10 mm auf und weiter eine Breite in einer Richtung quer zur Längsachse von höchstens 5 mm, bevorzugt höchstens 10 mm.

Gemäß einer weiteren vorteilhaften Ausgestaltung der Anordnung ist der Stützkörper bei 20 °C parallel zu einer Längsachse der ersten Abgasbehandlungsvorrichtung und der zweiten Abgasbehandlungsvorrichtung angeordnet. Infolge einer thermischen Beanspruchung der Anordnung von bis zu 800 °C neigt sich dieser Stützkörper um höchstens 2 Winkelgrad gegenüber der Längsachse. Dieser Parameter beschreibt die Flexibilität der Anordnung dadurch, dass eine Schrägstellung des Stützkörpers infolge des geringen Verformungswiderstandes der zweiten Abgasbehandlungsvorrichtung vermieden wird und sich der Stützkörper entsprechend innerhalb der Anordnung im Wesentlichen parallel verschieben kann. Diese Parallelverschiebung ist bevorzugt, da dann über den Stützkörper keine Scherkräfte oder Biegekräfte übertragen werden und damit ein Versagen des Stützkörpers oder aber ein Versagen der Anbindungspunkte bzw. von Komponenten der Abgasbehandlungsvorrichtung vermieden wird. Zumindest ist aber durch die Anordnung eine in radialer Richtung oder in Umfangsrichtung bewirkte Fixierung des Stützkörpers durch die zweite Abgasbehandlungsvorrichtung vermieden, so dass bereits durch diese Maßnahme die sonst auftretenden Scherkräfte und Biegekräfte hinreichend reduziert werden können.

Eine vorteilhafte Weiterbildung der Anordnung ist darauf gerichtet, dass die zweite Abgasbehandlungsvorrichtung ein Wabenkörper ist mit einer Vielzahl von für ein Abgas durchströmbaren Kanälen, wobei der zweite Teilbereich zumindest
a) eine geringere Anzahl von Kanälen pro Flächeneinheit aufweist als übrige Bereiche des Wabenkörpers, oder
b) aus metallischen Lagen gebildet ist, die eine geringere Materialstärke aufweisen, als die metallischen Lagen in den übrigen Bereichen des Wabenkörpers.

Insbesondere wird durch eine geringere Anzahl von Kanälen pro Flächeneinheit erreicht, dass die Flexibilität der Anbindungspunkte in diesem Teilbereich größer ist. Dies wird dadurch erreicht, dass weniger Kontaktflächen und weniger Abstützungspunkte der metallischen Komponenten untereinander vorliegen, bzw. diese weiter voneinander entfernt angeordnet sind. Entsprechendes gilt, wenn die metallischen Lagen eine geringere Materialstärke aufweisen, da in diesem Fall der Verformungswiderstand der Lagen sinkt.

Insbesondere erstreckt sich der zweite Teilbereich über die gesamte zweite Stirnseite der zweiten Abgasbehandlungsvorrichtung. Bevorzugt ist an dieser zweiten Stirnseite zumindest aber ein, insbesondere umlaufender, Restbereich in der Nähe des Gehäuses angeordnet, der einen höheren Flächenanteil mit stoffschlüssigen Anbindungen der metallischen Komponenten untereinander aufweist als im zweiten Teilbereich.

Durch die Erfindung wird eine zweite Abgasbehandlungsvorrichtung als so genannter Stützkatalysator vorgeschlagen, der einerseits eine hochflexible Wabenstruktur zumindest in einem zweiten Teilbereich aufweist, der andererseits aber eine Stützfunktion für einen elektrisch beheizbaren Wabenkörper gewährleistet, in dem eine hohe Steifigkeit zumindest in einem stromabwärts angeordneten Abschnitt vorgesehen ist. Somit kann ein Teleskopieren der Wabenstruktur der zweiten Abgasbehandlungsvorrichtung vermieden werden, wobei gleichzeitig ein Verschieben der Wabenstruktur im Bereich der zweiten Stirnseite möglich ist, so dass eine Abbeugung der Stützkörper in Verbindung mit höheren Biegekräfte und Scherkräften vermieden wird. Zumindest wird aber die Flexibilität im Bereich der zweiten Stirnseite derart erhöht, dass durch die Anordnung von Stützkörpern hervorgerufene Biegekräfte und Scherkräfte deutlich reduziert werden können. Die durch die erhöhte Flexibilität zumindest im zweiten Teilbereich gewährleistete Bewegungsfreiheit der Anbindungspunkte der Stützkörper ermöglicht ein Mitbewegen der Anbindungspunkte im zweiten Teilbereich mit der zwangsweise auftretenden Bewegung der Anbindungspunkte der Stützkörper im ersten Teilbereich der ersten Abgasbehandlungsvorrichtung. Durch die Erfindung kann somit eine Beschädigung der Stützkörper als auch eine Beschädigung der Wabenkörper vermieden werden und eine dauerfeste Anordnung gewährleistet werden.

Insbesondere ist mindestens ein zweiter Teilbereich in der Mitte (in radialer Richtung) der zweiten Abgasbehandlungsvorrichtung angeordnet, wobei hier ein (deutlich) größerer Anteil der Kontaktflächen zumindest Lötverbindungen oder Diffusionsverbindungen aufweist. Insbesondere umfasst die "Mitte" einen radialen Bereich um die Längsachse der Anordnung von 50 % des größten Durchmessers der Wabenstruktur der zweiten Abgasbehandlungsvorrichtung. Dabei sind insbesondere bis zu 100 % der Fläche der Kontaktflächen miteinander verbunden. Insbesondere sind in diesem Fall aber weitere zweite Teilbereiche im radial äußeren Bereich (außerhalb der "Mitte") der Wabenstruktur der zweiten Abgasbehandlungseinheit vorgesehen, die einen Anteil von miteinander verbundenen Flächen der Kontaktflächen von höchstens 20 % aufweisen.

Die Erfindung findet insbesondere Anwendung in einem Kraftfahrzeug aufweisend ein Abgassystem, wobei das Abgassystem mit einer hier erfindungsgemäß dargestellten Anordnung ausgeführt ist. Dazu kann die Anordnung mit einer Spannungsquelle und einer Kontrolleinheit verbunden sein, so dass die bedarfsgerechte Aktivierung eines elektrisch beheizbaren Wabenkörpers (erste Abgasbehandlungsvorrichtung) erfolgen kann.

Die Erfindung sowie das technische Umfeld werden nachfolgend anhand der Figuren näher erläutert. Es ist darauf hinzuweisen, dass die Figuren besonders bevorzugte Ausführungsvarianten der Erfindung aufzeigen, diese jedoch nicht beschränkt darauf ist. Es zeigen schematisch:
- Fig. 1:: eine Anordnung mit einer ersten Abgasbehandlungsvorrichtung und einer zweiten Abgasbehandlungsvorrichtung,
- Fig. 2:: ein Kraftfahrzeug mit einer Anordnung,
- Fig. 3:: einen Querschnitt durch einen elektrisch beheizbaren Wabenkörper,
- Fig. 4:: einen Stützkörper,
- Fig. 5:: eine Anordnung eines Stützkörpers in einer Wabenstruktur,
- Fig. 6.: eine weitere Anordnung eines Stützkörpers in einer Wabenstruktur, und
- Fig. 7:: eine weitere Ausführungsvariante einer Anordnung.

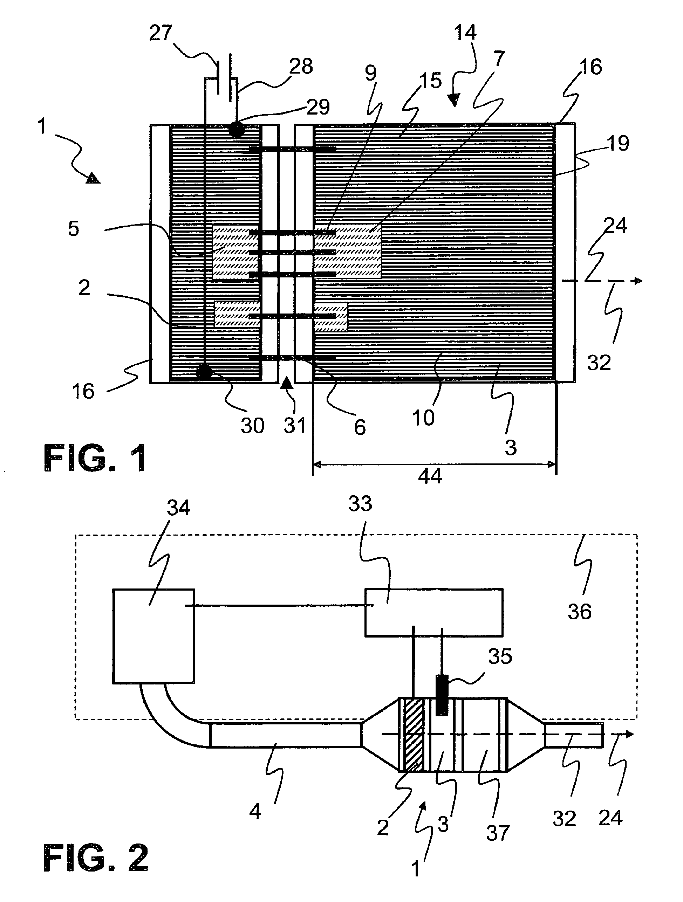

Fig. 1 zeigt eine Anordnung 1 mit einer ersten Abgasbehandlungsvorrichtung 2 und einer zweiten Abgasbehandlungsvorrichtung 3, die von einem Abgas 24 in einer Durchströmungsrichtung 32 nacheinander durchströmt werden. Die erste Abgasbehandlungsvorrichtung 2 weist ein Gehäuse 16 auf und ist als elektrisch beheizbarer Wabenkörper aufgebaut. Dieser weist einen elektrischen Anschluss 27 auf, mit dem die erste Abgasbehandlungsvorrichtung 2 elektrisch leitend über einen zweiten Anschluss 30 verbunden ist. Weiterhin ist eine elektrische Masse 28 vorgesehen, die über einen ersten Anschluss 29 mit der ersten Abgasbehandlungsvorrichtung 2 verbunden ist. Die erste Abgasbehandlungsvorrichtung 2 weist weiterhin einen ersten Teilbereich 5 auf, in dem mehrere Stützkörper 6 mit ihren jeweiligen Enden 9 angeordnet sind. Weiterhin sind hier Stützkörper 6 vorgesehen, die nicht in einem ersten Teilbereich 5 der ersten Abgasbehandlungsvorrichtung 2 angeordnet sind. Die erste Abgasbehandlungsvorrichtung 2 und die zweite Abgasbehandlungsvorrichtung 3 sind voneinander durch einen Spalt 31 beabstandet, wobei dieser Spalt 31 durch die Stützkörper 6 überbrückt wird. Die Stützkörper 6 sind entsprechend in der zweiten Abgasbehandlungsvorrichtung 3 zumindest teilweise in einem zweiten Teilbereich 7 mit ihren Enden 9 angeordnet. Die zweite Abgasbehandlungsvorrichtung 3 weist ebenfalls ein Gehäuse 16 auf sowie eine von einem Abgas durchströmbare Wabenstruktur 15, die zusammen den Wabenkörper 14 bilden. Die Wabenstruktur 15 wird zumindest teilweise durch metallische Komponenten 10 gebildet und erstreckt sich in Durchströmungsrichtung 32 hin zu einer stromabwärts angeordneten ersten Stirnseite 19. Die Wabenstruktur 15 kontaktiert über eine axiale Länge 44 das Gehäuse 16.

Fig. 2 zeigt ein Kraftfahrzeug 36 mit einer Verbrennungskraftmaschine 34, einer Abgasleitung 4 und einer in der Abgasleitung 4 angeordneten Anordnung 1 mit erster Abgasbehandlungsvorrichtung 2 und zweiter Abgasbehandlungsvorrichtung 3 sowie einer weiteren Abgasreinigungskomponente 37, die nacheinander, aber in beliebiger Reihenfolge in Durchströmungsrichtung 32 von einem Abgas 24 durchströmt werden. In der zweiten Abgasbehandlungsvorrichtung 3 ist ein Sensor 35 angeordnet, der mit einer Steuerung 33 verbunden ist. Dieser Sensor umfasst z. B. Temperatursensoren, so dass durch entsprechende Sensorsignale eine Beheizung eines elektrisch beheizbaren Wabenkörpers erfolgen kann, der hier durch die erste Abgasbehandlungsvorrichtung 2 realisiert wird.

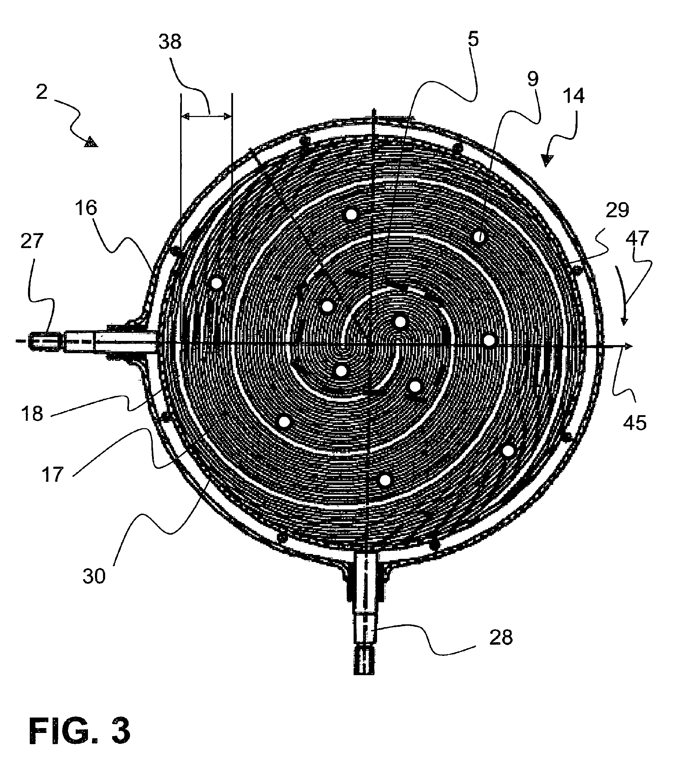

Fig. 3 zeigt einen elektrisch beheizbaren Wabenkörper 14 in einem Querschnitt. Dieser elektrisch beheizbare Wabenkörper 14 entspricht z. B. der ersten Abgasbehandlungsvorrichtung 2 in Fig. 1. Der Wabenkörper 14 umfasst ein Gehäuse 16 und eine Wabenstruktur 15, die ihrerseits durch metallische Lagen 17 aus glatten und gewellten Folien gebildet wird. Diese Lagen 17 sind hier gestapelt zu einer Stapelhöhe 38 und miteinander verwunden, wobei die Lagen 17 mit der Stapelhöhe 38 jeweils voneinander durch Luftspalte 18 beabstandet sind. Somit ist eine elektrische Isolierung der Lagen 17 voneinander zu gewährleisten, so dass eine gleichmäßige Erwärmung des elektrisch beheizbaren Wabenkörpers 14 möglich ist. Die einzelnen Lagen 17, die zu einer Stapelhöhe 38 jeweils zusammengefasst sind, werden über einen zweiten Anschluss 30 mit einem elektrischen Anschluss 27 und über einen ersten Anschluss 29 mit einer elektrischen Masse 28 kontaktiert, so dass ein elektrischer Stromfluss erzeugt wird. In dem Querschnitt ist erkennbar, dass Stützkörper mit ihren jeweiligen Enden 9 innerhalb der Wabenstruktur 15 und innerhalb eines ersten Teilbereichs 5 angeordnet sind. Durch die Luftspalte 18 und infolge des speziellen Aufbaus des elektrisch beheizbaren Katalysators erfolgt eine Verschiebung der Stützkörper zumindest in radialer Richtung 45 und/oder in Umfangsrichtung 47.

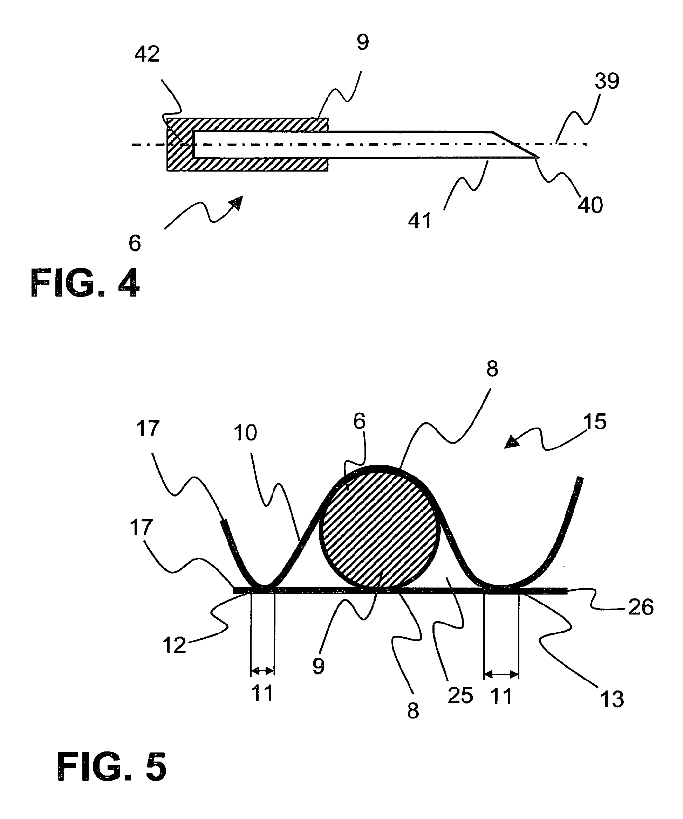

Fig. 4 zeigt einen Stützkörper 6, der durch einen runden Stift 41 gebildet wird, der sich entlang einer Mittelachse 39 erstreckt. Der Stützkörper 6 weist an seinem linken Ende 9 eine elektrische Isolierung 42 auf. An seinem rechten Ende 9 weist der Stützkörper 6 an einem Stift 41 eine Spitze 40 auf, die ein leichteres Einschieben des Stützkörpers 6 in die Wabenstruktur einer Abgasbehandlungsvorrichtung ermöglicht.

Fig. 5 zeigt die Anordnung eines Stützkörpers 6 innerhalb einer Wabenstruktur 15, wobei hier als metallische Komponenten 10 eine gewellte Lage 17 und eine glatte Lage 17 einen Kanal 25 bilden. Innerhalb dieses Kanals 25 ist ein Ende 9 eines Stützkörpers 6 angeordnet und über Anbindungspunkte 8 mit der (den) Lagen 17 verbunden. Die Lagen 17 weisen an Kontaktflächen 11 Lötverbindungen 12 und/oder Diffusionsverbindungen 13 auf und sind somit stoffschlüssig miteinander verbunden. Die Lagen 17 weisen weiterhin eine Materialstärke 26 auf.

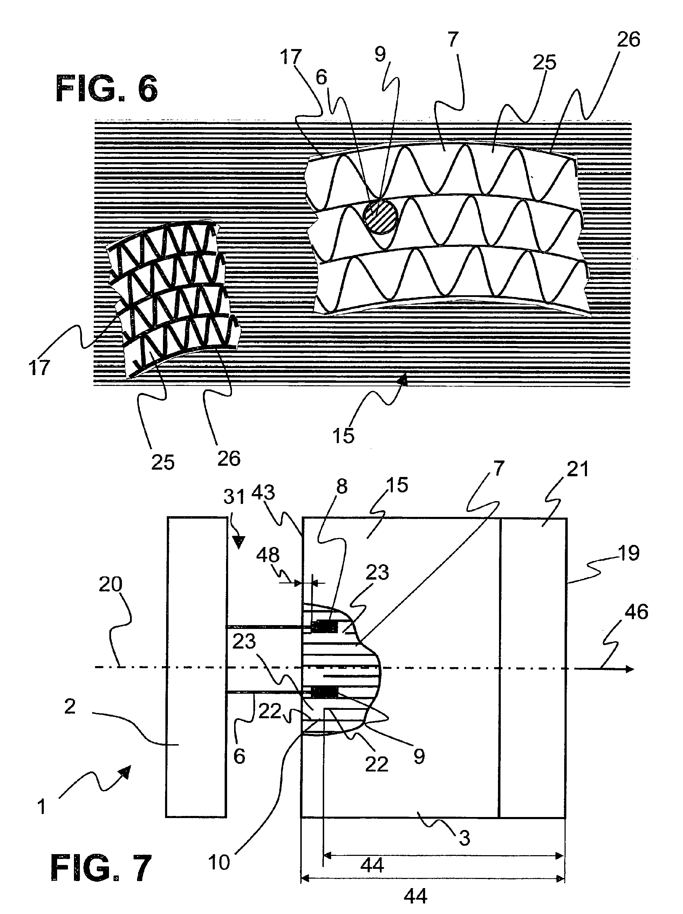

Fig. 6 zeigt im Querschnitt eine weitere Wabenstruktur 15, wobei die Wabenstruktur 15 zumindest teilweise durch glatte und gewellte Lagen 17 gebildet ist, die Kanäle 25 bilden und eine Materialstärke 26 aufweisen. Zumindest in einem zweiten Teilbereich 7 wird die Wabenstruktur 15 durch Lagen 17 gebildet, die einen größeren Kanalquerschnitt 25 und ggf. eine geringere Materialstärke 26 aufweisen. In diesem zweiten Teilbereich 7 sind Stützkörper 6 mit ihren jeweiligen Enden 9 angeordnet.

Fig. 7 zeigt eine weitere Anordnung 1 mit erster Abgasbehandlungsvorrichtung 2 und zweiter Abgasbehandlungsvorrichtung 3. Diese sind entlang einer Längsachse 20 in axialer Richtung 46 hintereinander angeordnet und durch einen Spalt 31 voneinander getrennt. Dieser Spalt 31 wird durch Stützkörper 6 überbrückt, so dass die beiden Abgasbehandlungsvorrichtungen 2, 3 durch die Stützkörper 6 miteinander verbunden werden. Die zweite Abgasbehandlungsvorrichtung 3 weist einen zweiten Teilbereich 7 auf, der von der zweiten Stirnseite 43 aus sich in die Wabenstruktur 15 erstreckt, in dem die Stützkörper 6 mit ihren Enden 9 an Anbindungspunkten 8 mit der Wabenstruktur 15 verbunden sind. Die Wabenstruktur 15 wird zumindest im zweiten Teilbereich 7 durch metallische Komponenten 10 gebildet, die jeweils Bereiche 22 mit unterschiedlichen Längen 44 entlang der Längsachse 20 aufweisen. Durch die unterschiedlichen Längen 44 bilden sich ausgehend von der zweiten Stirnseite 43 Aussparungen 23. Weitere Aussparungen 23 innerhalb der Komponente 10, also beabstandet von der zweiten Stirnseite 43, sind ebenfalls vorgesehen. Durch die dadurch fehlenden Kontaktflächen im Bereich der Anbindungspunkte 8 zwischen den Bereichen der metallischen Komponente 10 mit kürzerer Länge 44 bzw. den Aussparungen 23 und den Komponenten 10, an denen die Anbindungspunkte 8 angeordnet sind, wird die Flexibilität der Anbindungspunkte 8 bzw. der Stützkörper 6 innerhalb des zweiten Teilbereichs 7 gewährleistet. Der Anbindungspunkt 8 des Stützkörpers 6 in dem zweiten Teilbereich 7 ist in Richtung der Längsachse 20 in einer Tiefe 48 ausgehend von der zweiten Stirnseite 43 aus angeordnet. In einem Abschnitt 21 zwischen zweitem Teilbereich 7 und erster Stirnseite 19 liegt ein größerer Anteil an stoffschlüssig miteinander verbundenen Kontaktflächen der Komponenten 10 vor, so das hierdurch die Steifigkeit der Wabenstruktur 15 der zweiten Abgasbehandlungsvorrichtung 3 gewährleistet ist.

### Bezugszeichenliste

- 1: Anordnung
- 2: erste Abgasbehandlungsvorrichtung
- 3: zweite Abgasbehandlungsvorrichtung
- 4: Abgasleitung
- 5: erster Teilbereich
- 6: Stützkörper
- 7: zweiter Teilbereich
- 8: Anbindungspunkt
- 9: Ende
- 10: Komponente
- 11: Kontaktfläche
- 12: Lötverbindung
- 13: Diffusionsverbindung
- 14: Wabenkörper
- 15: Wabenstruktur
- 16: Gehäuse
- 17: Lage
- 18: Luftspalt
- 19: erste Stirnseite
- 20: Längsachse
- 21: Abschnitt
- 22: Bereich
- 23: Aussparung
- 24: Abgas
- 25: Kanal
- 26: Materialstärke
- 2 7: elektrischer Anschluss
- 28: elektrische Masse
- 29: erster Anschluss
- 30: zweiter Anschluss
- 31: Spalt
- 32: Durchströmungsrichtung
- 33: Steuerung
- 34: Verbrennungskraftmaschine
- 35: Sensor
- 36: Kraftfahrzeug
- 37: Abgasreinigungskomponente
- 38: Stapelhöhe
- 39: Mittelachse
- 40: Spitze
- 41: Stift
- 42: Isolierung
- 43: zweite Stirnseite
- 44: Länge
- 45: radiale Richtung
- 46: axiale Richtung
- 47: Umfangsrichtung
- 48: Tiefe

## Patentansprüche

1. Anordnung (1) umfassend zwei hintereinander angeordnete Abgasbehandlungsvorrichtungen (2, 3) in einer Abgasleitung (4), wobei eine erste Abgasbehandlungsvorrichtung (2) mit einem ersten Teilbereich (5) über mindestens einen Stützkörper (6) mit einem zweiten Teilbereich (7) einer zweiten Abgasbehandlungsvorrichtung (3) verbunden ist, wobei der Stützkörper (6) gegenüberliegende Enden (9) aufweist und an den Enden (9) über Anbindungspunkte (8) mit jeweils einem Teilbereich (5, 7) verbunden ist, wobei zumindest der zweite Teilbereich (7) durch metallische Komponenten (10) gebildet ist, die durch gegenseitige Kontaktierung Kontaktflächen (11) formen, **dadurch gekennzeichnet, dass** im zweiten Teilbereich (7) höchstens 20 % der Fläche der Kontaktflächen (11) zumindest Lötverbindungen (12) oder Diffusionsverbindungen (13) aufweisen.

2. Anordnung (1) gemäß Patentanspruch 1, wobei zumindest die zweite Abgasbehandlungsvorrichtung (3) ein Wabenkörper (14) ist, umfassend zumindest eine Wabenstruktur (15) und ein die Wabenstruktur (15) umschließendes Gehäuse (16), wobei die Wabenstruktur (15) zumindest teilweise durch glatte und strukturierte metallische Lagen (17) gebildet ist.

3. Anordnung (1) gemäß einem der vorhergehenden Patentansprüche, wobei die erste Abgasbehandlungsvorrichtung (2) zumindest teilweise durch Stapel aus metallischen Lagen (17) gebildet ist, wobei die Lagen (17) zumindest im ersten Teilbereich (5) zumindest teilweise durch Luftspalte (18) voneinander beabstandet sind.

4. Anordnung (1) gemäß einem der vorhergehenden Patentansprüche, wobei die erste Abgasbehandlungsvorrichtung (2) ein elektrisch beheizbarer Wabenkörper (14) ist.

5. Anordnung (1) gemäß einem der vorhergehenden Patentansprüche, wobei die zweite Abgasbehandlungsvorrichtung (3) eine der ersten Abgasbehandlungsvorrichtung (2) abgewandte erste Stirnseite (19) aufweist sowie eine Längsachse (20), und in Richtung der Längsachse (20) zwischen dem zweiten Teilbereich (7) und der ersten Stirnseite (19) in einem nur axial begrenzten Abschnitt (21) Kontaktflächen (11) von gegenseitig sich kontaktierenden metallischen Komponenten (10) aufweist, wobei mindestens 80 % der Fläche der Kontaktflächen (11) Lötverbindungen (12) und/oder Diffusionsverbindungen (13) aufweisen.

6. Anordnung (1) gemäß einem der vorhergehenden Patentansprüche, wobei die zweite Abgasbehandlungsvorrichtung (3) eine der ersten Abgasbehandlungsvorrichtung (2) zugewandte zweite Stirnseite (43) aufweist sowie eine Längsachse (20), wobei die zweite Abgasbehandlungsvorrichtung (3) mindestens eine metallische Komponente (10) mit unterschiedlich langen Bereichen (22) in Richtung der Längsachse (20) umfasst, wobei die Anbindungspunkte (8) zumindest teilweise an längeren Bereichen (22) der Komponenten (10) angeordnet sind, wobei die längeren Bereiche (22) der Komponente (10) an der zweiten Stirnseite (43) zumindest im zweiten Teilbereich (7) in Richtung der Längsachse (20) über die kürzeren Bereiche (22) der Komponente (11) überstehen.

7. Anordnung (1) gemäß einem der vorhergehenden Patentansprüche, wobei die zweite Abgasbehandlungsvorrichtung (3) zumindest mit einer metallischen Komponente (10) mit mindestens einer Aussparung (23) gebildet ist, wobei die Aussparung (23) zumindest teilweise benachbart zu einem Anbindungspunkt (8) angeordnet ist und wobei die Aussparung (23) zumindest teilweise zwischen einer der ersten Abgasbehandlungsvorrichtung (2) zugewandten zweiten Stirnseite (43) und dem Anbindungspunkt (8) vorgesehen sind.

8. Anordnung (1) gemäß einem der vorhergehenden Patentansprüche, wobei der Stützkörper (6) bei 20 °C parallel zu einer Längsachse (20) der ersten Abgasbehandlungsvorrichtung (2) und der zweiten Abgasbehandlungsvorrichtung (3) angeordnet ist und sich infolge einer thermischen Beanspruchung der Anordnung (1) von bis zu 800 °C um höchstens 2 Winkelgrad gegenüber der Längsachse (20) neigt.

9. Anordnung (1) gemäß einem der vorhergehenden Patentansprüche, wobei die zweite Abgasbehandlungsvorrichtung (3) ein Wabenkörper (14) ist mit einer Vielzahl von für ein Abgas (24) durchströmbaren Kanälen (25), wobei der zweite Teilbereich (7) zumindest
a) eine geringere Anzahl von Kanälen (25) pro Flächeneinheit aufweist als übrige Bereiche des Wabenkörpers (14), oder
b) aus metallischen Lagen (17) gebildet ist, die eine geringere Materialstärke (26) aufweisen, als die metallischen Lagen (17) in den übrigen Bereichen des Wabenkörpers (14).

## Claims

1. Arrangement (1) comprising two exhaust gas treatment devices (2, 3) arranged in series in an exhaust gas line (4), wherein a first exhaust gas treatment device (2) is connected by means of a first sub-region (5) to a second sub-region (7) of a second exhaust gas treatment device (3) via at least one support body (6), wherein the support body (6) has opposite ends (9) and is connected via attachment points (8) to respective sub-regions (5, 7) at the ends (9), wherein at least the second sub-region (7) is formed by metal components (10) that form contact surfaces (11) by mutual contact, **characterized in that** in the second sub-region (7) at most 20% of the area of the contact surfaces (11) has at least brazed joints (12) or diffusion joints (13).

2. Arrangement (1) as claimed in claim 1, wherein at least the second exhaust gas treatment device (3) is a honeycomb body (14), comprising at least one honeycomb structure (15) and a housing (16) which surrounds the honeycomb structure (15), wherein the honeycomb structure (15) is formed at least in part by smooth and structured metallic layers (17).

3. Arrangement (1) as claimed in one of the preceding claims, wherein the first exhaust gas treatment device (2) is formed at least in part by stacks of metallic layers (17), wherein the layers (17) at least in the first sub-region (5) are spaced apart at least in part by air gaps (18).

4. Arrangement (1) as claimed in one of the preceding claims, wherein the first exhaust gas treatment device (2) is an electrically heatable honeycomb body (14).

5. Arrangement (1) as claimed in one of the preceding claims, wherein the second exhaust gas treatment device (3) has a first front end (19), which faces away from the first exhaust gas treatment device (2), and a longitudinal axis (20), and has contact surfaces (11) of mutually contacting metal components (10) between the second sub-region (7) and the first front end (19) in the direction of the longitudinal axis (20), in a section (21) restricted only axially, wherein at least 80% of the area of the contact surfaces (11) has brazed joints (12) and/or diffusion joints (13).

6. Arrangement (1) as claimed in one of the preceding claims, wherein the second exhaust gas treatment device (3) has a second front end (43), which faces the first exhaust gas treatment device (2), and a longitudinal axis (20), wherein the second exhaust gas treatment device (3) comprises at least one metal component (10) having regions (22) of different lengths in the direction of the longitudinal axis (20), wherein the attachment points (8) are arranged at least in part on longer regions (22) of the components (10), wherein the longer regions (22) of the component (10) project beyond the shorter regions (22) of the component (11) in the direction of the longitudinal axis (20) at the second front end (43) at least in the second sub-region (7).

7. Arrangement (1) as claimed in one of the preceding claims, wherein the second exhaust gas treatment device (3) is formed at least with a metal component (10) having at least one recess (23), wherein the recess (23) is arranged at least in part adjacent to an attachment point (8), and wherein the recess (23) is provided at least in part between a second front end (43), which faces the first exhaust gas treatment device (2), and the attachment point (8).

8. Arrangement (1) as claimed in one of the preceding claims, wherein the support body (6) is arranged parallel to a longitudinal axis (20) of the first exhaust gas treatment device (2) and of the second exhaust gas treatment device (3) at 20°C and slopes at a maximum of 2 degrees of angle relative to the longitudinal axis (20) as a result of a thermal stress on the arrangement (1) of up to 800°C.

9. Arrangement (1) as claimed in one of the preceding claims, wherein the second exhaust gas treatment device (3) is a honeycomb body (14) having a multiplicity of channels (25), through which an exhaust gas (24) can flow, wherein the second sub-region (7) at least
a) has a smaller number of channels (25) per unit of surface area than the remaining regions of the honeycomb body (14), or
b) is formed from metallic layers (17) which have a smaller material thickness (26) than the metallic layers (17) in the remaining regions of the honeycomb body (14).

## Revendications

1. Agencement (1) comprenant deux dispositifs de traitement de gaz d'échappement (2, 3) disposés l'un derrière l'autre dans un tuyau d'échappement (4), dans lequel un premier dispositif de traitement de gaz d'échappement (2) est assemblé par une première région partielle (5), au moyen d'au moins un corps de support (6), à une deuxième région partielle (7) d'un deuxième dispositif de traitement de gaz d'échappement (3), dans lequel le corps de support (6) présente des extrémités opposées (9) et est assemblé par les extrémités (9), au moyen de points de liaison (8), respectivement à une région partielle (5, 7), dans lequel au moins la deuxième région partielle (7) est formée par des composants métalliques (10), qui forment des faces de contact (11) par contact direct, **caractérisé en ce que** 20 % au maximum de la surface des faces de contact (11) dans la deuxième région partielle (7) présentent au moins des liaisonS brasées (12) ou des liaisons par diffusion (13).

2. Agencement (1) selon la revendication 1, dans lequel au moins le deuxième dispositif de traitement de gaz d'échappement (3) est un corps en nid d'abeilles (14), comprenant au moins une structure en nid d'abeilles (15) et un boîtier (16) enveloppant la structure en nid d'abeilles (15), dans lequel la structure en nid d'abeilles (15) est formée au moins en partie par des couches métalliques lisses et structurées (17).

3. Agencement (1) selon l'une quelconque des revendications précédentes, dans lequel le premier dispositif de traitement de gaz d'échappement (2) est formé au moins en partie par des piles de couches métalliques (17), dans lequel les couches (17) sont espacées les unes des autres au moins en partie par des lames d'air (18) au moins dans la première région partielle (5).

4. Agencement (1) selon l'une quelconque des revendications précédentes, dans lequel le premier dispositif de traitement de gaz d'échappement (2) est un corps en nid d'abeilles (14) à chauffage électrique.

5. Agencement (1) selon l'une quelconque des revendications précédentes, dans lequel le deuxième dispositif de traitement de gaz d'échappement (3) présente un premier côté frontal (19) orienté à l'opposé du premier dispositif de traitement de gaz d'échappement (2) ainsi qu'un axe longitudinal (20) et présente, entre la deuxième région partielle (7) et le premier côté frontal (19) dans la direction de l'axe longitudinal (20), dans une section uniquement limitée axialement (21), des faces de contact (11) de composants métalliques (10) en contact mutuel, dans lequel au moins 80 % de la surface des faces de contact (11) présentent des liaisons brasées (12) et/ou des liaisons par diffusion (13).

6. Agencement (1) selon l'une quelconque des revendications précédentes, dans lequel le deuxième dispositif de traitement de gaz d'échappement (3) présente un deuxième côté frontal (43) orienté vers le premier dispositif de traitement de gaz d'échappement (2) ainsi qu'un axe longitudional (20), dans lequel le deuxième dispositif de traitement de gaz d'échappement (3) comprend au moins un composant métallique (10) avec des régions de différentes longueurs (22) dans la direction de l'axe longitudinal (20), dans lequel les points de liaison (8) sont disposés au moins en partie dans des régions plus longues (22) du composant (10), dans lequel les régions plus longues (22) du composant (10) surplombent au deuxième côté frontal (43), au moins dans la deuxième région partielle (7) dans la direction de l'axe longitudinal (20), les régions plus courtes (22) du composant (11).

7. Agencement (1) selon l'une quelconque des revendications précédentes, dans lequel le deuxième dispositif de traitement de gaz d'échappement (3) est formé, au moins avec un composant métallique (10), avec au moins une découpe (23), dans lequel la découpe (23) est disposée au moins en partie au voisinage d'un point de liaison (8) et dans lequel la découpe (23) est prévue au moins en partie entre un côté frontal (43) orienté vers le premier dispositif de traitement de gaz d'échappement (2) et le point de liaison (8).

8. Agencement (1) selon l'une quelconque des revendications précédentes, dans lequel le corps de support (6) est disposé à 20°C parallèlement à un axe longitudinal (20) du premier dispositif de traitement de gaz d'échappement (2) et du deuxième dispositif de traitement de gaz d'échappement (3) et s'incline, sous l'effet d'une sollicitation thermique de l'agencement (1) jusqu'à 800°C, au maximum de 2 degrés d'angle par rapport à l'axe longitudinal (20).

9. Agencement (1) selon l'une quelconque des revendications précédentes, dans lequel le deuxième dispositif de traitement de gaz d'échappement (3) est un corps en nid d'abeilles (14) avec une multiplicité de canaux (25) pouvant être parcourus par un gaz d'échappement (24), dans lequel la deuxième région partielle (7)
a) au moins présente un plus petit nombre de canaux (25) par unité de surface que d'autres régions du corps en nid d'abeilles (14), ou
b) est formée de couches métalliques (17), qui présentent une plus faible épaisseur de matière (26) que les couches métalliques (17) dans les autres régions du corps en nid d'abeilles (14).
